# EUROPEAN PATENT SPECIFICATION

(11) **EP 1 987 979 B1**
(45) Date of publication and mention of the grant of the patent: **28.12.2011**
(21) Application number: 07702309.1
(22) Date of filing: 08.02.2007
(51) Int. Cl.: F16H 37/04, F16H 3/095

(54) **MULTI-SPEED COMPOUND VEHICULAR TRANSMISSION HAVING AN AUXILIARY SECTION WITH THREE COUNTERSHAFTS**
MEHRFACH-GESCHWINDIGKEITS-VERBINDUNGS-FAHRZEUG-ÜBERTRAGUNG AUS EINER HILFSSEKTION MIT DREI GEGENSCHAFTEN
BOITE DE VITESSE COMPOSITE MULTI-VITESSE POUR VEHICULE AVEC PARTIE AUXILIAIRE A TROIS ARBRES DE RENVOI

(30) Priority: 20.02.2006 CN 200610041802
(43) Date of publication of application: 05.11.2008
(73) Proprietor: Shaanxi Fast Gear Co., Ltd, Shaanxi Province 710077 (CN)
(72) Inventor: TIAN, Hu, Shaanxi Province 710077 (CN); WANG, Shunli, Shaanxi Province 710077 (CN); YANG, Lin, Shaanxi Province 710077 (CN); LI, Dakai, Shaanxi Province 710077 (CN)
(74) Representative: Schmitz, Alexander
(86) International application number: PCT/CN2007/000436
(87) International publication number: WO 2007/095841

(56) References cited:
- EP-A1- 0 009 775
- EP-A2- 0 595 496
- CN-Y- 2 746 205
- CN-Y- 2 746 205
- DE-U- 6 800 685
- FR-A5- 2 159 625
- JP-A- 10 009 347
- SU-A1- 1 650 983
- SU-A1- 1 787 814
- US-A- 4 807 493
- US-A- 5 421 216
- US-A- 5 511 437

## Description

### CROSS-REFERENCES TO RELATED APPLICATIONS

This application claims the benefit of Chinese Patent Application No. 200610041802.2 filed on February 20, 2006 and entitled with "Multi-Speed Compound Vehicular Transmission Having an Auxiliary Section with Three Countershafts".

### FIELD OF THE INVENTION

The present invention relates to a mechanical transmission device for a vehicle, particularly to a multi-speed compound vehicular transmission having an auxiliary section with countershafts.

### BACKGROUND OF THE INVENTION

EN2746205Y2 discloses the preamble of claim 1.

An important issue in designing modem vehicular transmission systems is to improve load capacity of the mechanical transmission. The most effective design for modem mechanical transmissions of heavy vehicles is to provide several identical countershafts in the mechanical transmissions of heavy vehicles to split the power so as to improve the load capacity of the gear transmission assembly. A double-countershaft transmission successfully achieves the above purpose and has a significant share of market.

A known multi-speed double-countershaft vehicular transmission with compound main section and auxiliary section includes a main section and an auxiliary section. Among which, the auxiliary section employs a double-countershaft structure, i.e., is provided with two countershafts at both side of an auxiliary section main shaft, with the two auxiliary section countershafts symmetrically and equidistantly arranged with respect to the auxiliary section main shaft and located in the same plane with the auxiliary section main shaft. When power is transmitted from the main section to the auxiliary section via a main section output shaft, a driving gear arranged on the main section output shaft engages with a driven gear arranged on the auxiliary section countershaft, such that power is split into two parts to be respectively transmitted to the two auxiliary section countershafts. Shaft teeth on the two auxiliary section countershafts engage with teeth of gears arranged on the auxiliary section main shaft such that power may be transmitted to the auxiliary section main shaft, combined thereat, and output via the auxiliary section main shaft.

As the road transportation condition is improved increasingly, the road transportation plays a more and more important role in the entire transport service. For heavy trucks, container trailers, cranes and the like, the transmission equipped therewith is expected to be able to transmit a larger torque, operate at a wider speed range, provide a more reliable performance, and manufactured with a lower cost. However, for a known double-countershaft mechanical transmission, if the input torque exceeds 2200Nm, the gear width, thus the centre distance of the transmission will be increased accordingly. Therefore, the axial size of the transmission would be increased, yielding an increased cost and a reduced reliability. Further, noise and impact will increase under a larger load, and the service life of the gear will be reduced. Therefore, the application of the known double-countershaft transmission is limited in the heavy vehicle field.

### SUMMARY OF THE INVENTION

The object of the present invention is to overcome one or more defects of the prior art multi-speed compound transmission with double countershafts, and to provide a multi-speed compound structure having an auxiliary section with three countershafts which is adapted for a multi-speed compound transmission gear box requiring a larger power, higher torque and greater load capacity.

The present invention is achieved by the following technical solutions.

According to one aspect of the present invention, a multi-speed compound vehicular transmission having an auxiliary section with three countershafts, comprising:
a main section; and
an auxiliary section, wherein

the main section comprises an output shaft, a synchronizer and two countershafts symmetrically arranged on both sides of the output shaft; and
the auxiliary section comprises an auxiliary section main shaft and a synchronizer, with a reduction gear arranged on the auxiliary section main shaft and countershafts arranged around the auxiliary section main shaft; wherein

there are three countershafts arranged around the auxiliary section main shaft, the three countershafts being arranged to be parallel to each other and being distributed with equal distance around the auxiliary section main shaft;
a driven gear of the auxiliary section countershaft is engaged to a driving gear
an auxiliary section countershaft gear is engaged to the reduction gear; and
an output end of the auxiliary section main shaft is connected to a flange.

One of the three auxiliary section countershafts is concentric with one of the two main section countershafts.

Preferably, the synchronizer is a lock pin synchronizer.

Preferably, the synchronizer is a lock ring synchronizer.

Preferably, the synchronizer is a lock ring synchronizer with a single cone or multiple cones.

Preferably, the lock ring synchronizer with multiple cones is a lock ring synchronizer with double cones or triple cones. The present invention is advantageous in that:

1. Since the number of the auxiliary section countershafts is increased from two to three, in the case that the load of the transmission is kept unchanged, the load carried by each countershaft is reduced, thus the thickness of the gears may be reduced, and the axial size of the transmission may be reduced. Further, the load capacity of the auxiliary section may be improved.

2. A three-countershaft structure is employed in the auxiliary section such that it is possible to increase the number of teeth engaging with the main shaft gear of the auxiliary section, thus to achieve a smoother transmission compared with a known auxiliary section with double countershafts, to reduce noise and impact, and to improve the life of the auxiliary section gears.

### BRIEF DESCRIPTION OF THE DRAWINGS

The illustrated Figures are used to further explain the present invention and constitute a part of the application, and the schematic embodiments and the description thereof are used to interpret the present invention and do not constitute a limit to the present invention, in which

Figure 1 is a sectional view showing an overall structure of a main section output shaft which is provided with a sliding bush for engagement according to an embodiment of the present invention (in which the other main section countershaft assembly and the other two auxiliary section countershaft assembly are not shown);

Figure 2 is a schematic view showing the positional relationship between the main section output shaft, the two main section countershafts, and the three auxiliary section countershafts according to the embodiment of the present invention; and

Figure 3 is a partial sectional view showing a structure of a main section output shaft which is provided with a lock ring synchronizer with double cones for engagement according to another embodiment of the present invention.

### DETAILED DESCRIPTION OF THE INVENTION

The overall structure and the operating process of an embodiment according to the present invention will be explained in conjunction with accompanying figures in detailed.

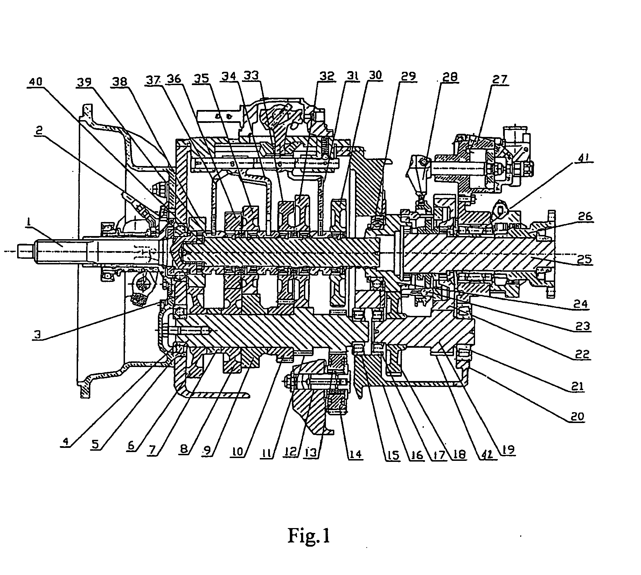

As shown in Figure 1, which is a sectional view showing an overall structure of a main section output shaft which is provided with a sliding bush for engagement according to an embodiment of the present invention. The multi-speed compound vehicular transmission having an auxiliary section with three countershafts is provided with a five-gear (including one climbing gear) main section and a two-gear auxiliary section. The main section of the vehicular transmission having an auxiliary section with three countershafts includes an input shaft 1, an input shaft gear 38 and an output shaft 40 connected to the right end of the input shaft 1 in order. The output shaft is provided with an output shaft reverse gear 30, an output shaft low speed gear 32 of, an output shaft first speed gear 33, an output shaft second speed gear 35, an output shaft third speed gear 36, and sliding bushes 39 arranged thereon. The sliding bushes 39 are adapted to engage the low gear to the reverse gear, to engage the first speed gear to the second speed gear, and to engage the third speed gear to the forth speed gear, respectively.

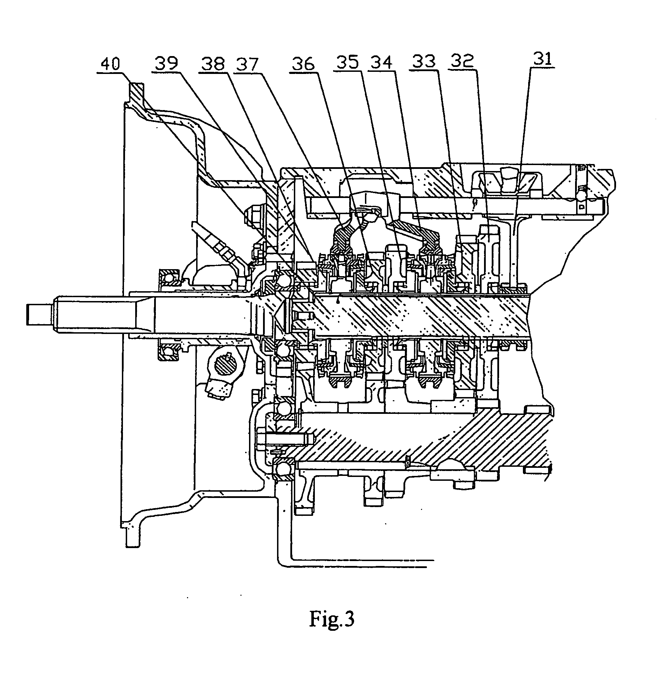

As shown in Figure 3, which is a partial sectional view showing a structure of a main section output shaft which is provided with a lock ring synchronizer with double cones for engagement according to another embodiment of the present invention. Synchronizers 39' arranged at positions indicated by the numeral 39 are adapted to engage the first speed gear to the second speed gear, and to engage the third speed gear to the forth speed gear. The synchronizers 39' may be a lock ring synchronizer, a lock pin synchronizer, a lock ring synchronizer with a single cone, or a lock ring synchronizer with multiple cones. The lock ring synchronizer with multiple cones may be a lock ring synchronizer with double cones or a lock ring synchronizer with triple cones.

Gear-shifting means of the main section, which is composed of a low & reverse shifting fork 31, a 1^{st} & 2^{nd} shifting fork 34, a 3^{rd} & 4^{th} shifting fork 37, as well as respective shifting fork shafts and shifting fork heads, is arranged above the sliding bushes, i.e. is arranged on a top cover of the main section. Two countershafts 5 are symmetrically arranged at both sides of the output shaft and are both parallel to the output shaft. A first gear on the countershaft is a driven gear 6 which constantly engages with the input shaft gear 38, and other gears 11, 10, 9, 8 arranged on the countershaft constantly engage with the corresponding output shaft gears, respectively. The input shaft, output shaft and the countershafts are coupled to the main section body via bearings 2, 29, 4 and 15, respectively.

The auxiliary section of the vehicular transmission having an auxiliary section with three countershafts includes an auxiliary section main shaft 25, a driven gear 18 of the auxiliary section countershaft, as well as a reduction gear 22 of the auxiliary section main shaft and a lock pin synchronizer 23 arranged on the auxiliary section main shaft. The synchronizer 23 may be a lock ring synchronizer, a lock pin synchronizer, a lock ring synchronizer with a single cone, or a lock ring synchronizer with multiple cones. The lock ring synchronizer with multiple cones may be a lock ring synchronizer with double cones or a lock ring synchronizer with triple cones . A gear-shifting means of the auxiliary section, which is composed of a shifting fork, a shifting fork shaft 28, and a cylinder 27, is arranged on a rear cover 20 of the auxiliary section. The shifting fork is driven by a piston of the cylinder.

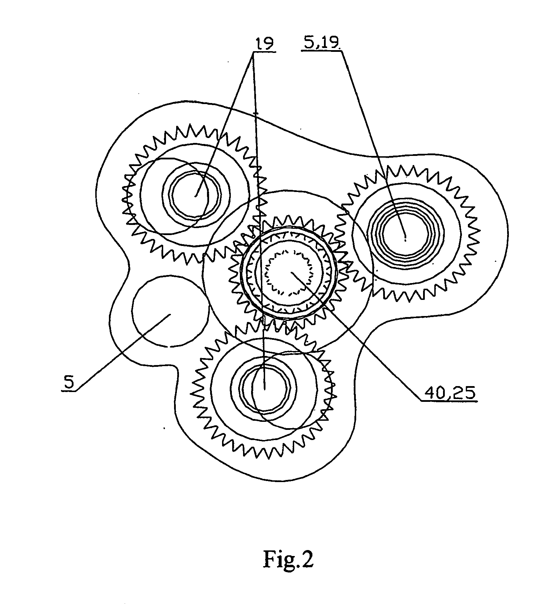

As shown in Figure 2, which is a schematic view showing the positional relationship between the main section output shaft, the two main section countershafts, and the three auxiliary section countershafts according to the embodiment of the present invention. The main section output shaft 40 is concentric with the auxiliary section main shaft 25, and there are three countershafts 19 around the auxiliary section main shaft. The three countershafts 19 are arranged to be parallel to each other and are distributed with equal distance around the auxiliary section main shaft. Among which, one auxiliary section countershaft is concentric with one of the two main section countershafts 5. Alternatively, the three auxiliary section countershafts may be not concentric with respect to either of the two main section countershafts. The driven gear 18 of the auxiliary section countershaft engages with a driving gear 24, and the shaft gear of the auxiliary section countershaft engages with the reduction gear 22. The auxiliary section main shaft is supported on the rear cover housing 20 via a compound bearing 41, and the auxiliary section countershafts are coupled to the auxiliary section housing 16 and the rear cover housing 20 via bearings 17 and 21, respectively. The output end of the auxiliary section main shaft is connected to a flange 26. The auxiliary section driving gear 24 is coupled to the auxiliary section housing 16 via a bearing 29. Figure 1 also shows a reverse countershaft 12, a bearing 13 and a reverse countershaft gear thereof.

Hereinafter, taking the third speed gear as an example, the operating process of the multi-speed compound vehicular transmission having an auxiliary section with three countershafts according to an embodiment of the present application will be described in detailed.

As shown in Figure 1, power is transmitted from the engine to the main section input shaft 1 and thus to the input shaft gear 38 via a clutch. The input shaft gear 38 constantly engages with the countershaft driven gear 6 to drive the countershaft 5 to rotate. The countershaft gear 8 constantly engages with the output shaft gear 36, and the output shaft gear 36 is idling on the output shaft and is spline-coupled to outer splines on the sliding bush 39. Since the sliding bush 39 is spline-coupled to the output shaft 40 and the shifting fork 37 straddles the sliding bush, when the shifting fork 37 is actuated by a movement of the shifting fork shaft, the sliding bush will move along with the shifting fork. When the engaging teeth (external spline) of the sliding bush engages with the engaging teeth (internal spline) of the output shaft gear 36, the output shaft is coupled to the output shaft gear to rotate with a certain gear ratio to transmit power. The power is transmitted to the auxiliary section driving gear 24, and torque is transmitted to respective driven gear 18 of the auxiliary section countershaft in a split manner. The gear 42 on the auxiliary section countershaft 19 constantly engages with the reduction gear 22 of the auxiliary section main shaft. Therefore, power is converged from the three auxiliary section countershafts 19 to the auxiliary section reduction gear 22. The reduction gear 22 engages with sleeve on the lock pin synchronizer 23 of the auxiliary section to transmit power to the auxiliary section main shaft 25. Thereafter, power is output via the flange 26. Similar to the above-discussed situation, shifting to the reverse gear is achieved by pushing the sliding bush rightwards by the shifting fork 31.

When the two-gear auxiliary section is set at the high gear, power output by the main section output shaft is transmitted to the auxiliary section main shaft 25 by engaging the auxiliary section driving gear 24 with the sleeve of the lock pin synchronizer 23 of the auxiliary section, and output via the flange 26. When the two-gear auxiliary section is set at the low gear, power output by the main section output shaft is transmitted to the driven gear 18 of the auxiliary section countershaft via the auxiliary section driving gear 24, then transmitted to the auxiliary section main shaft 25 by engaging the reduction gear 22 of the auxiliary section with the sleeve of the synchronizer 23, and finally output via the flange 26. The sleeve of the synchronizer of the auxiliary section is operated by a push of the auxiliary section shifting fork 28 by the piston of the cylinder 27.

According to the embodiment of the present invention, a three-countershaft structure is employed in the auxiliary section such that it is possible to increase the number of teeth simultaneously engaging with the main shaft gear of the auxiliary section, to reduce noise and impact, and to improve the life of the auxiliary section countershaft and of the auxiliary section gears. Since the number of the countershafts of the auxiliary section is increased from two to three, in the case that the load of the transmission is kept unchanged, the load carried by each countershaft is reduced, thus the thickness of the gears may be reduced, and the axial size of the transmission may be reduced.

The embodiment described above is merely used to explain the principle of the invention. It can be appreciated that the present invention is not limited thereto. For those skilled in the art, various variations and modifications which are made without departing from the spirit and the scope of the invention shall fall within the scope of the invention. Therefore, the protect scope of the present invention will be defined by the claims.

## Claims

1. A multi-speed compound vehicular transmission having an auxiliary section with three countershafts, comprising:
a main section; and
an auxiliary section, wherein
the main section comprises an output shaft (40), a synchronizer (39) and two countershafts (5) symmetrically arranged on both sides of the output shaft; and
the auxiliary section comprises an auxiliary section main shaft (25) and a synchronizer (23), with a reduction gear (22) arranged on the auxiliary section main shaft and countershafts (19) arranged around the auxiliary section main shaft;
a driven gear (18) of the auxiliary section countershaft is engaged to a driving gear (24);
an auxiliary section countershaft gear is engaged to the reduction gear (22); and
an output end of the auxiliary section main shaft (25) is connected to a flange (26),
**characterized in that**
there are three countershafts (19) arranged around the auxiliary section main shaft, the three countershafts (19) being arranged to be parallel to each other and being distributed with equal distance around the auxiliary section main shaft;
one of the three auxiliary section countershafts (19) is concentric with one of the two main section countershafts (5).

2. The multi-speed compound vehicular transmission having an auxiliary section with three countershafts according to Claim 1, wherein the synchronizer (23) or the synchronizer (39) is a lock pin synchronizer.

3. The multi-speed compound vehicular transmission having an auxiliary section with three countershafts according to Claim 1, wherein the synchronizer (23) or the synchronizer (39) is a lock ring synchronizer.

4. The multi-speed compound vehicular transmission having an auxiliary section with three countershafts according to Claim 3, wherein the synchronizer (23) or the synchronizer (39) is a lock ring synchronizer with a single cone.

5. The multi-speed compound vehicular transmission having an auxiliary section with three countershafts according to Claim 3, wherein the synchronizer (23) or the synchronizer (39) is a lock ring synchronizer with multiple cones.

6. The multi-speed compound vehicular transmission having an auxiliary section with three countershafts according to Claim 5, wherein the lock ring synchronizer with multiple cones is a lock ring synchronizer with double cones.

7. The multi-speed compound vehicular transmission having an auxiliary section with three countershafts according to Claim 5, wherein the lock ring synchronizer with multiple cones is a lock ring synchronizer with triple cones.

## Patentansprüche

1. Mehrstufiges Fahrzeuggetriebe mit einem Nebenstrang mit drei Vorlegewellen, aufweisend:
einen Hauptstrang, und
einen Nebenstrang,
wobei der Hauptstrang eine Abtriebswelle (40), einen Synchronisierer (39) und zwei Vorlegewellen (5) aufweist, die symmetrisch an beiden Seiten der Abtriebswelle angeordnet sind, und
wobei der Nebenstrang eine Nebenstrang-Hauptwelle (25) und einen Synchronisierer (23) aufweist, wobei ein Reduktions-Zahnrad (22) auf der Nebenstrang-Hauptwelle und Vorlegewellen (19) um die Nebenstrang-Hauptwelle herum angeordnet sind,
wobei ein angetriebenes Zahnrad (18) von der Nebenstrang-Vorlegewelle im Eingriff mit einem antreibenden Zahnrad (24) ist,
wobei ein Nebenstrang-Vorlegewellen-Zahnrad im Eingriff mit dem Reduktions-Zahnrad (22) ist, und
wobei ein Abtriebsende der Nebenstrang-Hauptwelle (25) mit einem Flansch (26) verbunden ist,
**dadurch gekennzeichnet, dass** drei Vorlegewellen (19) um die Nebenstrang-Hauptwelle herum angeordnet sind, wobei die drei Vorlegewellen (19) derart angeordnet sind, dass sie parallel zueinander sind und mit gleichen Abstand um die Nebenstrang-Hauptwelle herum angeordnet sind, und
dass eine der drei Nebenstrang-Vorlegewellen (19) konzentrisch mit einer der zwei Hauptstrang-Vorlegewellen (5) ist.

2. Mehrstufiges Fahrzeuggetriebe mit einem Nebenstrang mit drei Vorlegewellen gemäß Anspruch 1, wobei der Synchronisierer (23) oder der Synchronisierer (39) ein Raststift-Synchronisierer ist.

3. Mehrstufiges Fahrzeuggetriebe mit einem Nebenstrang mit drei Vorlegewellen gemäß Anspruch 1, wobei der Synchronisierer (23) oder der Synchronisierer (39) ein Klemmring-Synchronisierer ist.

4. Mehrstufiges Fahrzeuggetriebe mit einem Nebenstrang mit drei Vorlegewellen gemäß Anspruch 3, wobei der Synchronisierer (23) oder der Synchronisierer (39) ein Klemmring-Synchronisierer mit einem einzelnen Konus ist.

5. Mehrstufiges Fahrzeuggetriebe mit einem Nebenstrang mit drei Vorlegewellen gemäß Anspruch 3, wobei der Synchronisierer (23) oder der Synchronisierer (39) ein Klemmring-Synchronisierer mit einem Mehrfach-Konus ist.

6. Mehrstufiges Fahrzeuggetriebe mit einem Nebenstrang mit drei Vorlegewellen gemäß Anspruch 5, wobei der Klemmring-Synchronisierer mit Mehrfach-Konus ein Klemmring-Synchronisierer mit einem Doppel-Konus ist.

7. Mehrstufiges Fahrzeuggetriebe mit einem Nebenstrang mit drei Vorlegewellen gemäß Anspruch 5, wobei der Klemmring-Synchronisierer mit Mehrfach-Konus ein Klemmring-Synchronisierer mit einem Dreifach-Konus ist.

## Revendications

1. Une boîte de vitesses composite multivitesse pour véhicule, ayant une partie auxiliaire à trois arbres intermédiaires, comportant :
une partie principale, et
une partie auxiliaire, dans laquelle
la partie principale comporte un arbre de sortie (40), un synchroniseur (39) et deux arbres intermédiaires (5) agencés symétriquement des deux côtés de l'arbre de sortie, et
la partie auxiliaire comporte un arbre principal de partie auxiliaire (25) et un synchroniseur (23), un engrenage réducteur (22) étant agencé sur l'arbre principal de partie auxiliaire et des arbres intermédiaires (19) étant agencés autour de l'arbre principal de partie auxiliaire,
un engrenage mené (18) de l'arbre intermédiaire de partie auxiliaire est en prise avec un engrenage menant (24),
un engrenage d'arbre intermédiaire de partie auxiliaire est en prise avec un engrenage réducteur (22), et
une extrémité de sortie de l'arbre principal de partie auxiliaire (25) est reliée à un flasque (26),
**caractérisée en ce que** trois arbres intermédiaires (19) sont agencés autour de l'arbre principal de partie auxiliaire, les trois arbres intermédiaires (19) étant agencés de manière à être parallèles les uns aux autres et étant répartis avec une distance égale autour de l'arbre principal de partie auxiliaire,
l'un des trois arbres intermédiaires de partie auxiliaire (19) est concentrique à l'un des deux arbres intermédiaires de partie principale (5).

2. La boîte de vitesses composite multivitesse pour véhicule ayant une partie auxiliaire à trois arbres intermédiaires selon la revendication 1, dans laquelle le synchroniseur (23) ou le synchroniseur (39) est un synchroniseur à ergot d'arrêt.

3. La boîte de vitesses composite multivitesse pour véhicule ayant une partie auxiliaire à trois arbres intermédiaires selon la revendication 1, dans laquelle le synchroniseur (23) ou le synchroniseur (39) est un synchroniseur à bague d'arrêt.

4. La boîte de vitesses composite multivitesse pour véhicule ayant une partie auxiliaire à trois arbres intermédiaires selon la revendication 3, dans laquelle le synchroniseur (23) ou le synchroniseur (39) est un synchroniseur à bague d'arrêt avec un cône unique.

5. La boîte de vitesses composite multivitesse pour véhicule ayant une partie auxiliaire à trois arbres intermédiaires selon la revendication 3, dans laquelle le synchroniseur (23) ou le synchroniseur (39) est un synchroniseur à bague d'arrêt avec des cônes multiples.

6. La boîte de vitesses composite multivitesse pour véhicule ayant une partie auxiliaire à trois arbres intermédiaires selon la revendication 5, dans laquelle le synchroniseur à bague d'arrêt avec des cônes multiples est un synchroniseur à bague d'arrêt avec des cônes doubles.

7. La boîte de vitesses composite multivitesse pour véhicule ayant une partie auxiliaire à trois arbres intermédiaires selon la revendication 5, dans laquelle le synchroniseur à bague d'arrêt avec des cônes multiples est un synchroniseur à bague d'arrêt avec des cônes triples.
